# EUROPÄISCHE PATENTANMELDUNG

(11) **EP 1 541 011 A1**
(43) Veröffentlichungstag der Anmeldung: **15.06.2005**
(21) Anmeldenummer: 04023539.2
(22) Anmeldetag: 02.10.2004
(51) Int. Cl.: A01G 9/02, A01G 9/04, A47G 7/08

(54) **Pflanzbehälter**

(30) Priorität: 12.12.2003 DE 10358688
(71) Anmelder: KRONIMUS AG, 76473 Iffezheim (DE)
(72) Erfinder: Verhas, Georg, 40239 Düsseldorf (DE)
(74) Vertreter: Otten, Herbert

(57) **Zusammenfassung**

Der vorliegenden Erfindung liegt die Aufgabe zugrunde, einen Pflanzbehälter (1) zur Verfügung zu stellen, der eine variable Gestaltung hinsichtlich der Pflanzengröße bei gleichzeitiger Reduzierung des Aufwandes für die Neuund/oder Umpflanzung der Begrünung ermöglicht.

Gelöst wird die Aufgabe dadurch, dass die innere Formgebung des Außenbehälters (2) der äußeren Formgebung des Innenbehälters (3) angepasst ist,
derart, dass eine obere (4) und eine untere (5), im Querschnitt trapezförmige Kammer mit konischen Seitenwänden (6) gebildet sind,
wobei der Übergang zwischen den beiden Kammern (4, 5) wenigstens einen ersten, nach innen weisenden Absatz (7) bildet.

## Beschreibung

Die vorliegende Erfindung betrifft Pflanzbehälter nach dem Oberbegriff des Anspruchs 1.

Pflanzbehälter oder Pflanzkübel für Begrünungen, z.B. für Innenstädte, für Terrassen, für die Verschönerung von Einund Zugangsbereichen und dergleichen mehr werden handelsüblicherweise aus verschiedenen Materialien hergestellt. Beispiele für Materialien sind Beton, Terrakotta, Kunststoff, Fieberglas, Eternit oder Metall. Durch diese Materialien ergibt sich für die Behältnisse ein großes Gewicht und damit eine hohe Standfestigkeit.

Ein Nachteil dieser Pflanzbehälter liegt darin, dass ein Wechsel der Begrünung oder Bepflanzung zeit- und somit kostenintensiv ist, da die Bepflanzung in der Regel vor Ort eingesetzt bzw. getauscht wird. Ein weiterer Nachteil besteht in der mangelnden Bepflanzungsflexibilität hinsichtlich der Größe der Pflanzen bei gleichzeitig angepasster Wasserversorgung. So können beispielsweise in einer bestimmten Größe eines Pflanzbehälters nur kleinwüchsige Pflanzen (bis ca. 30 cm Höhe), oder bei einem entsprechend großen Behältnis nur großwüchsige Pflanzen (mit einer Höhe von 50 cm und darüber) bei einem gut funktionierendem Bewässerungssystem eingesetzt werden.

Eine Bepflanzung der Pflanzkübel an einem zentralen Ort, wie beispielsweise einer Gärtnerei, ist, wenn überhaupt, nur unter sehr großen Mühen und Umständen möglich.

### Aufgabe und Vorteile der Erfindung:

Aufgabe der vorliegenden Erfindung ist es, einen Pflanzbehälter zur Verfügung zu stellen, der eine variable Gestaltung hinsichtlich der Pflanzengröße bei gleichzeitiger Reduzierung des Aufwandes für die Neu- und/oder Umpflanzung und Betreuung der Begrünung ermöglicht.

Gelöst wird diese Aufgabe durch die technische Lehre des Anspruchs 1.

Aus den Unteransprüchen gehen weitere Merkmale für vorteilhafte Ausführungen und Weiterbildungen der Erfindung hervor.

Erfindungsgemäß wird dazu ein zweiteiliger Pflanzbehälter oder Pflanzkübel vorgeschlagen, der aus einem äußeren und einem inneren Behälter besteht. Die Formgebung der beiden Behälter ist derart, dass der innere Behälter in den äußeren Behälter gut einsetzbar und auch wieder entnehmbar ist. Vorzugsweise ist der Außenbehälter dazu mit zwei übereinander angeordneten, trapezförmigen Kammern mit konischen Seitenwänden ausgestattet, die räumlich ineinander übergehen.

Im Übergang zwischen beiden Kammern ist ein nach innen weisender Absatz ausgebildet, der als Auflage für einen Innenbehälter dienen kann. Dieser Absatz ist vorzugsweise aber nicht zwingend als rund umlaufender Absatz ausgebildet.

Für eine demgegenüber verbesserte Abstützung des Innenbehälters im Außenbehälter kann es in einer Ausführungsform nach den Merkmalen des Anspruchs 2 vorgesehen sein, dass im Bodenbereich der unteren Kammer ein weiterer Absatz als zusätzliche Auflagefläche für einen Innenbehälter ausgebildet ist.

Durch eine im Bodenbereich der unteren Kammer nach unten hin durchgehende Öffnung ist sichergestellt, dass zuviel zugeführtes Wasser, beispielsweise in starken Regenperioden, nach unten hin abfließen kann.

In der Ausführungsform nach Anspruch 3 ist es vorgesehen, dass im Außenbehälter Ausnehmungen angeordnet sind, so dass überschüssiges Wasser auch wieder abfließen kann. Diese Ausnehmungen führen von oben nach unten bis in die durchgehende Öffnung des Bodens der zweiten Kammer. Diese Ausnehmungen können auch für die Durchführung von Elektroinstallationen durch den Pflanzbehälter hindurch genutzt werden. So kann beispielsweise ein Kabel zwischen dem Außen- und dem Innenbehälter zu einer im Bodenbereich angeordneten Beleuchtung geführt werden.

Nach Anspruch 4 sind die Ausnehmungen als Rinnen oder Rillen ausgebildet, die in die Oberfläche der Innenseite des Außenbehälters vertieft angeordnet sind.

Nach Anspruch 5 kann der Außenbehälter eine Hebevorrichtung aufweisen, die als Haken, Öse, Bügel oder dergleichen mehr ausgebildet sein kann. Sie kann fest oder auch lösbar mit diesem verbunden sein und zum Anheben oder Versetzen des Außenbehälters oder des gesamten Pflanzbehälters dienen.

Um den Außenbehälter stabil aufstellen zu können, sind im Fußbereich beispielsweise mehrere nach unten weisende Sockel angeordnet. Zwischen diesen Sockeln können Öffnungen ausgebildet sein, wodurch zum einen die Möglichkeit besteht, dass der Pflanzkübel mittels eines Hubwagen am Boden angehoben und verfahren werden kann, und zum anderen auch das Licht einer im Fußbereich des Außenbehälters angeordneten Beleuchtung austreten kann.

In verschiedenen Ausführungsformen kann der Außenbehälter in der Draufsicht unterschiedliche Formen aufweisen. Vorzugsweise kann er rechteckige oder quadratische Formen aufweisen, es sind aber auch runde und ovale Formen in der Ausgestaltung möglich. Somit können sowohl mit den eckigen als auch mit den runden Ausführungsformen wahlweise kompakte, kübelartige oder längliche, wannenartige Pflanzbehälter ausgebildet werden.

Die Innenbehälter können nach Anspruch 8 entweder eine oder auch zwei übereinander ausgebildete, trapezförmige Kammern aufweisen. Die Ausführungsform mit zwei übereinander angeordneten Kammern ist vorzugsweise für Pflanzen mit einer Wuchshöhe vom 50 cm und mehr vorgesehen. Diese benötigen einen größeren Innenbehälter, da sie auch größere Wurzelballen aufweisen. Die Ausführungsform mit einer Kammer ist vorzugsweise für die Bepflanzung von niedrig wachsenden Pflanzen mit einer Höhe bis ca. 30 cm vorgesehen.

Dazu ist es in einer Ausführungsform nach Anspruch 9 vorgesehen, dass der Innenbehälter auf dem ersten, nach innen weisenden Absatz in dem Außenbehälter aufliegt. So kann auch ein Innenbehälter, der lediglich aus einer, im Querschnitt trapezförmigen Kammer besteht, in den Außenbehälter eingesetzt werden.

Für die Ausführungsform, die aus zwei übereinander angeordneten, im Querschnitt trapezförmigen Kammern besteht, ist es vorgesehen, dass der Innenbehälter ebenfalls auf dem ersten, nach innen weisenden Absatz des Außenbehälters aufliegt. Zusätzlich kann dieser Innenbehälter aber auch auf dem weiteren, nach innen weisenden Absatz aufliegen, der im Fußbereich des Außenbehälters angeordnet ist. Er kann aber ggf. auch lediglich auf dem weiteren Absatz aufstehen.

Um den Pflegeaufwand für die Pflanzen verringern zu können, kann es auch vorgesehen sein, dass eine Anstaubewässerung im inneren Pflanzbehälter angeordnet ist. Dadurch kann speziell in den Sommermonaten die Häufigkeit der Gießvorgänge für die einzelnen Pflanzbehälter stark reduziert werden.

Das Behältnis für die Anstaubewässerung weist Überläufe auf, die dafür sorgen, dass die Pflanzen nur mit einer maximal zulässigen Menge an Wasser versorgt werden. Diese Überläufe sind beispielsweise als Ausnehmungen im Innenbehälter ausgebildet. Das daraus ablaufende, überschüssige Wasser kann über die Ausnehmungen im äußeren Behälter abgeleitet werden. Somit wird ein Nässestau im Pflanzbehälter vermieden.

Bei beispielsweise saisonal bedingten Änderungen in der Bepflanzung können die Innenkübel an einer Hebevorrichtung, wie z.B. Hebeösen oder dergleichen, einfach wieder aus dem Außenkübel entnommen und zusammen mit weiteren, bepflanzten Innenkübeln auf einem Fahrzeug in eine Gärtnerei zum Umpflanzen gebracht werden. Nach dem Umpflanzen können die Innenbehälter auf dem gleichen Weg wieder vor Ort gebracht und in die Außenbehälter eingesetzt werden.

Speziell bei größeren Innenbehältern kann es vorgesehen sein, dass eine zusätzliche Ballenfixiervorrichtung in der Form von Ösen, Haken oder dergleichen vorgesehen ist, an welcher der Ballen eines größeren Gehölzes fixiert werden kann. Bei kleineren Innenbehältern ist diese Verankerung nicht unbedingt erforderlich, sie kann jedoch durchaus auch vorgesehen sein.

Um für die Pflanzen auch in der Winterzeit eine möglichst lange funktionierende Bewässerung zur Verfügung zu stellen, kann eine Wärmedämmung im Bewässerungssystem ausgebildet sein. Dadurch wird bei Temperaturen um den Gefrierpunkt eine Verzögerung der Eisbildung des Wassers erreicht, was sich positiv auf die Pflanzen auswirkt.

Vorteilhafte Ausführungsformen des Pflanzbehälters sind in den beigefügten Zeichnungen dargestellt und werden nachfolgend unter Bezugnahme darauf näher erläutert.

### Es zeigen

- Figur 1: einen Schnitt durch einen Pflanzbehälter mit Innen- und Außenkübel und darin eingesetztem Gehölz;
- Figur 2: einen Schnitt durch einen weiteren Pflanzkübel mit einem gegenüber der Ausführungsform in der Figur 1 kleineren Innenkübel und darin eingesetzter niedriger Bepflanzung;
- Figuren 3 bis 5: einen Schnitt, eine Draufsicht und eine Unteransicht eines Außenkübels nach den Figuren 1 und 2;
- Figuren 6 und 7: einen Schnitt und eine Draufsicht auf einen großen Innenkübel; und
- Figuren 8 und 9: einen Schnitt und eine Draufsicht auf einen kleinen Innenkübel.

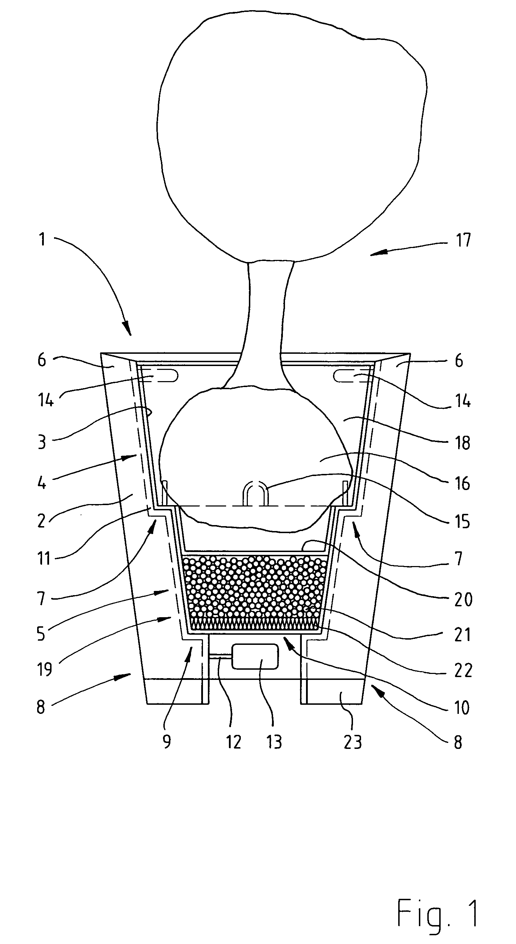

Die Figur 1 zeigt einen Schnitt durch einen erfindungsgemäßen Pflanzbehälter 1, der aus einem Außenbehälter 2 und einem Innenbehälter 3 besteht. In der oberen Hälfte des Außenbehälters 2 ist eine obere Kammer 4 ausgebildet, an die sich nach unten hin eine untere Kammer 5 anschließt. Die beiden, im Querschnitt trapezförmigen Kammern 4, 5 sind von den Seitenwänden 6 umschlossen. Der Übergang zwischen den beiden Kammern 4, 5 bildet einen nach innen weisenden Absatz 7 aus. Dieser Absatz 7 stellt eine obere, erste Auflagefläche für einen einzusetzenden Innenbehälter dar. Einen weiteren, nach innen weisenden Absatz 9 bilden die Seitenwände 6 im Bodenbereich 8 des Außenbehälters 2 aus. Dieser weitere Absatz 9 dient als untere Auflage für den eingesetzten Innenbehälter 3. Er steht mit seinem Boden auf den von den Seitenwänden 6 nach innen weisenden Vorsprüngen auf.

In der Mitte des Bodenbereichs 8 ist weiterhin eine nach unten durchgehende Öffnung 10 im Außenbehälter 2 ausgespart.

Parallel zur Innenkontur des Außenbehälters 2 sind an beiden Seitenwänden 6 Ausnehmungen 11 in gestrichelter Darstellung gezeigt. Sie erstrecken sich von der Oberkante des Außenbehälters 2 bis zur Unterkante im Fußbereich. Diese Ausnehmungen 11 sind als vertiefte Rinnen ausgebildet, die beispielsweise in den Eckbereichen einer eckigen Ausführungsform des Außenbehälters angeordnet sein können. Zusätzlich zur Wasserregulierungsfunktion können diese Ausnehmungen 11 für die Unterbringung von Elektroinstallationen 12 genutzt werden, die beispielsweise die Beleuchtung 13 versorgen, für die im Boden- und/oder Fußbereich 8 des Außenbehälters eine Aufnahme ausgebildet ist.

Im Innenbehälter 3 ist eine Hebevorrichtung 14 dargestellt, mittels derer er angehoben und versetzt werden kann.

Für die Befestigung des Ballens 16 des im Substrat 18 eingesetzten Gehölzes 17 sind drei Ballenhalter 15 dargestellt.

Um die im Innenbehälter 3 angeordnete Anstaubewässerung 19 vor Durchsetzung mit dem Substrat 18 zu schützen, ist zwischen beiden ein Vlies 20 angeordnet, so dass das Substrat nicht in die Drainierschicht 21 eindringen kann. Unterhalb der Drainierschicht 21 ist die Isolierung 22 angeordnet.

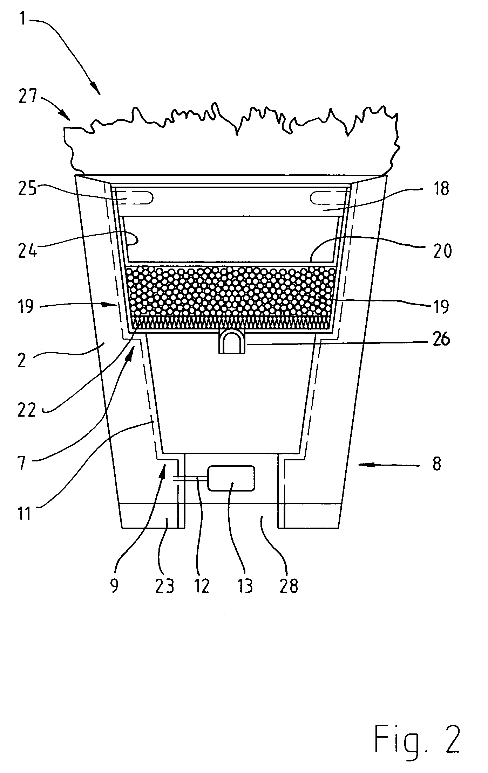

Die Figur 2 zeigt einen Pflanzbehälter 1, der den gleichen Außenbehälter 2 aufweist, wie die Ausführungsform in Figur 1. Für die niedrig wachsenden Pflanzen 27 ist hierbei ein kleiner Innenbehälter 24 gezeigt, verglichen mit dem Innenbehälter 3 aus der Figur 1. Die Elemente 6 bis 13 und 18 bis 22 sind funktionsgemäß identisch mit den Komponenten in der Ausführungsform der Figur 1.

Lediglich der Absatz 9 hat in dieser Ausführungsform keine Funktion für den Innenbehälter 24, da dieser nur bis zum Absatz 7 in den Außenbehälter 2 hineinragt, der eine Hebevorrichtung 26 aufweist. Eingesetzt wird der Innenbehälter 24 durch die Hebevorrichtung 25.

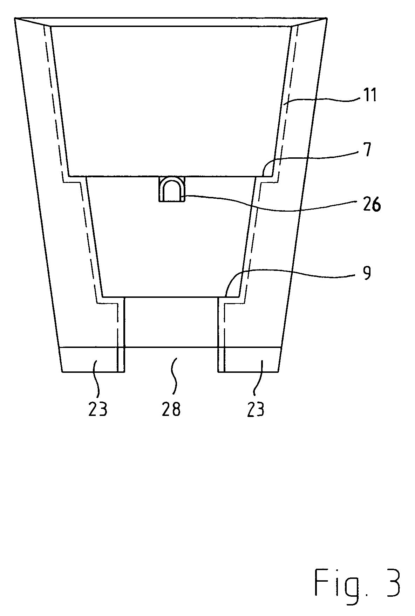

Die Figur 3 zeigt einen Schnitt durch den Außenkübel 2 mit den darin angeordneten Absätzen 7, 9 für die unterschiedlich großen Innenbehälter 3, 24. Weiterhin sind Ausnehmungen 11, Füße 23 und ein Transportauslass 28 dargestellt.

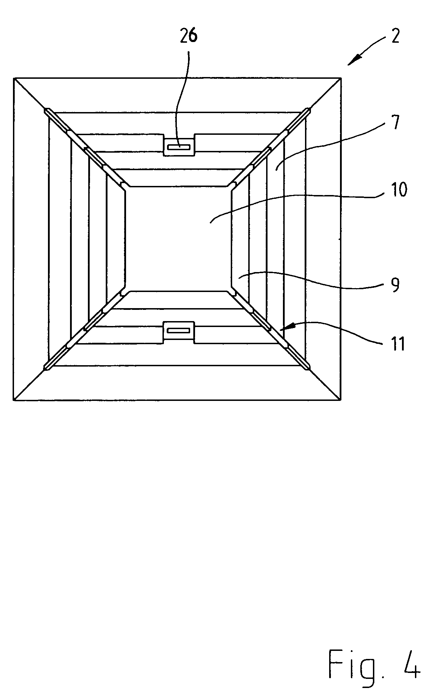

Die Figur 4 zeigt eine Draufsicht auf den Außenbehälter 2 mit in jeder Innenecke ausgebildeten Ausnehmungen 11. Im Absatz 7 sind zwei Hebevorrichtungen 26 dargestellt, innerhalb des unteren Absatzes 9 ist die Öffnung 10 gezeigt.

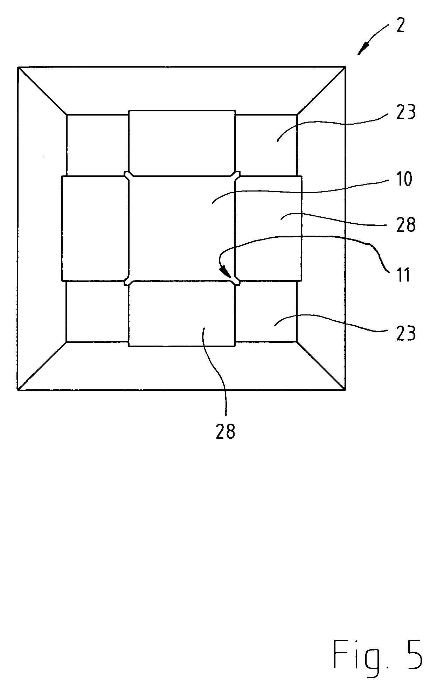

Figur 5 zeigt eine Unteransicht auf den Außenbehälter 2.

Zwischen den Füßen 23 sind die Transportauslässe 28 ausgebildet. In den Innenecken sind die Ausnehmungen 11 dargestellt.

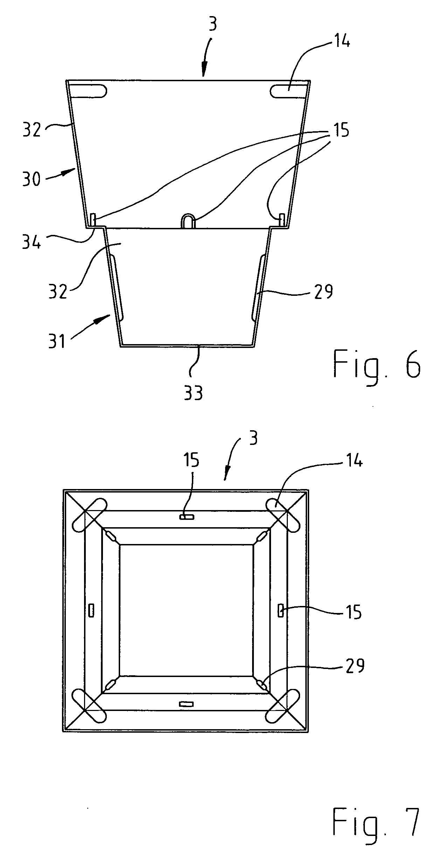

Figur 6 zeigt einen Schnitt durch einen großen Innenbehälter 3, bestehend aus den Kammern 30, 31, zwischen denen der nach innen weisender Absatz 34 ausgebildet ist. Die Seitenwänden 32 sind konisch geformt, und die untere Kammer 31 ist mit einem Boden 33 abgeschlossen. Die Hebevorrichtungen 14 und die Ballenhalter 15 ergänzen mit dem durch Ausschnitte an den Ecken gebildeten Überlauf 29 den Innenbehälter 3, der in Figur 7 in Draufsicht gezeigt ist.

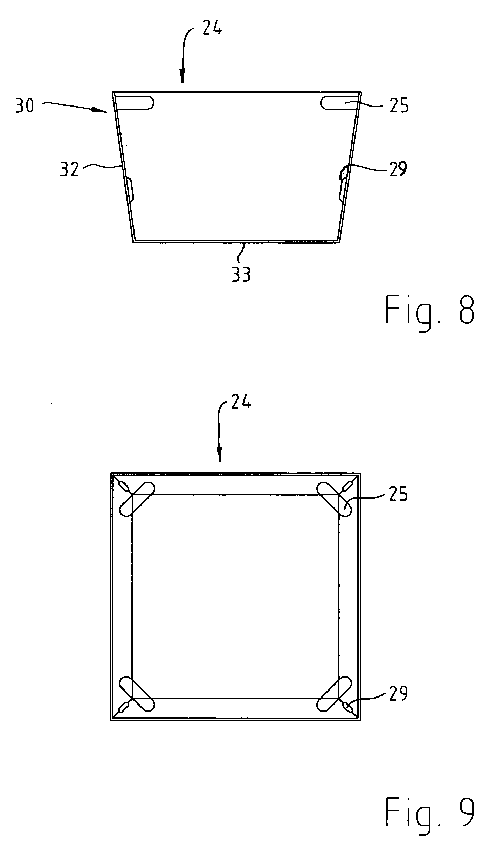

Die Figur 8 zeigt eine Schnittdarstellung eines kleinen Innenbehälters 24, der nur eine Kammer 30 mit Seitenwänden 32 und Boden 33 aufweist, welcher im eingesetzten Zustand auf dem Absatz 7 des Außenbehälters 2 aufliegt. Die Hebevorrichtungen 25 und Überläufe 29 ergänzen die Abbildung.

Die Figur 9 zeigt die Draufsicht auf diesen kleinen Innenbehälter 24.

### Bezugszeichenliste:

- 1: Pflanzbehälter
- 2: Außenbehälter
- 3: Innenbehälter
- 4: Obere Kammer
- 5: Untere Kammer
- 6: Seitenwand
- 7: Absatz
- 8: Bodenbereich
- 9: Absatz
- 10: Öffnung
- 11: Ausnehmung
- 12: Elektroinstallation
- 13: Beleuchtung
- 14: Hebevorrichtung
- 15: Ballenhalter
- 16: Ballen
- 17: Gehölz
- 18: Substrat
- 19: Anstaubewässerung
- 20: Vlies
- 21: Drainierschicht
- 22: Isolierung
- 23: Fuß
- 24: Innenbehälter
- 25: Hebevorrichtung
- 26: Hebevorrichtung
- 27: Pflanzen
- 28: Transportauslass
- 29: Überlauf
- 30: Kammer
- 31: Kammer
- 32: Seitenwand
- 33: Boden
- 34: Absatz

## Patentansprüche

1. Pflanzbehälter (1)
mit einem Außenbehälter (2) und
mit einem Innenbehälter (3)
**dadurch gekennzeichnet, dass** die innere Formgebung des Außenbehälters (2) der äußeren Formgebung des Innenbehälters (3) angepasst ist,
derart, dass eine obere (4) und eine untere (5), im Querschnitt trapezförmige Kammer mit konischen Seitenwänden (6) gebildet sind,
wobei der Übergang zwischen den beiden Kammern (4, 5) wenigstens einen ersten, nach innen weisenden Absatz (7) bildet.

2. Pflanzbehälter nach Anspruch 1, **dadurch gekennzeichnet, dass** die Seitenwände (6) des Außenbehälters (2) unterhalb der unteren Kammer (5) in einen Bodenbereich (8) übergehen, wobei die Innenkontur des Außenbehälters (2) einen weiteren, nach innen weisenden Absatz (9) bildet, und/oder wobei im Bodenbereich (8) eine nach unten durchgehende Öffnung (10) ausgebildet ist.

3. Pflanzbehälter nach einem der vorangehenden Ansprüche, **dadurch gekennzeichnet, dass** die Seitenwände (6) wenigstens eine von oben nach unten führende Ausnehmung (11) für ein Bewässerungssystem und/oder für die Führung von Elektroinstallationen aufweisen.

4. Pflanzbehälter nach einem der vorangehenden Ansprüche, **dadurch gekennzeichnet, dass** die Ausnehmungen (11) als in der Innenkontur des Außenbehälters (2) vertieft angeordnete Rinnen ausgebildet sind.

5. Pflanzbehälter nach einem der vorangehenden Ansprüche, **dadurch gekennzeichnet, dass** am Außenbehälter (2) eine Hebevorrichtung (26) ausgebildet ist.

6. Pflanzbehälter nach einem der vorangehenden Ansprüche, **dadurch gekennzeichnet, dass** der Außenbehälter (2) in der Draufsicht eine etwa rechteckige oder quadratische Form aufweist.

7. Pflanzbehälter nach einem der vorangehenden Ansprüche, **dadurch gekennzeichnet, dass** der Außenbehälter (2) in der Draufsicht eine runde oder ovale Form aufweist.

8. Pflanzbehälter nach einem der vorangehenden Ansprüche, **dadurch gekennzeichnet, dass** der Innenbehälter (3, 24) eine im Querschnitt trapezförmige Kammer (30) mit konischen Seitenwänden (32) aufweist, die nach unten hin einen Boden (33) oder einen nach innen weisenden Absatz (34) mit einer weiteren, daran anschließenden, im Querschnitt trapezförmigen Kammer (31) mit Boden (33) aufweist.

9. Pflanzbehälter nach einem der vorangehenden Ansprüche, **dadurch gekennzeichnet, dass** der Innenbehälter (3, 24) nach dem Einsetzen in den Außenbehälter (2) wenigstens auf dem ersten, nach innen weisenden Absatz (7) und/oder auf dem weiteren, nach innen weisenden Absatz (9) aufliegt.

10. Pflanzbehälter nach einem der vorangehenden Ansprüche, **dadurch gekennzeichnet, dass** am Innenbehälter (3, 24) eine Anstaubewässerung (19) mit Überlauf (29) angeordnet ist.

11. Pflanzbehälter nach einem der vorangehenden Ansprüche, **dadurch gekennzeichnet, dass** am Innenbehälter (3, 24) eine Hebevorrichtung (14, 25) und/oder eine Ballenfixiervorrichtung (15) ausgebildet ist.
